# EUROPEAN PATENT SPECIFICATION

(11) **EP 2 112 337 B1**
(45) Date of publication and mention of the grant of the patent: **20.06.2012**
(21) Application number: 09004829.9
(22) Date of filing: 01.04.2009
(51) Int. Cl.: F01L 3/08, F16J 15/32

(54) **Valve stem seal**
Ventilschaftabdichtung
Joint de tige de soupape

(30) Priority: 23.04.2008 JP 2008112726
(43) Date of publication of application: 28.10.2009
(73) Proprietor: Carl Freudenberg KG, 69469 Weinheim (DE)
(72) Inventor: Iwai, Haruki, Fukushima-shi Fukushima 960-1193 (JP)

(56) References cited:
- EP-A- 0 439 676
- EP-A- 0 519 158
- DE-C- 854 448
- DE-U- 7 309 269
- US-A- 3 829 105
- US-A- 4 147 367
- US-A- 4 811 960
- US-A- 4 947 811
- US-A- 5 110 142
- US-B1- 6 318 328
- US-B1- 6 764 079

## Description

The present invention relates to a valve stem seal.

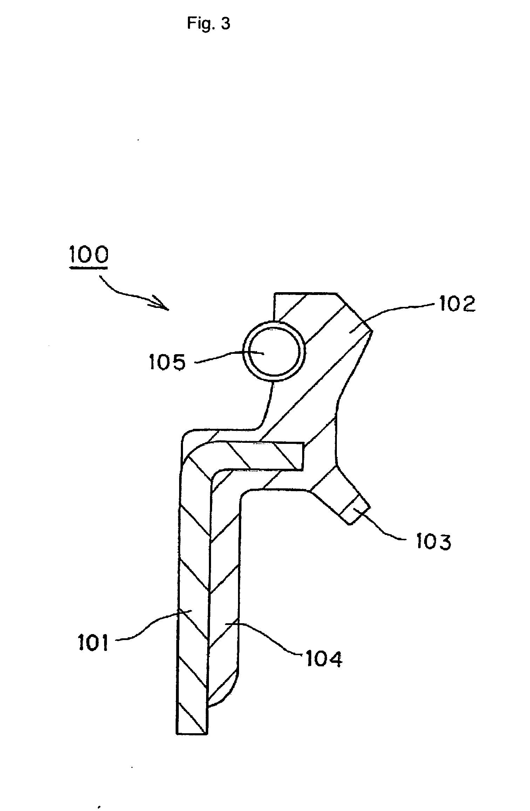

An example of a valve stem seal used in a valve stem of intake or exhaust mechanisms of an engine of vehicles or general industrial machinery is shown in Fig. 3. Fig. 3 is a half-sectional view schematically illustrating a valve stem seal known per se (see e.g. EP A1-0 519 158).

As shown in Fig. 3, a valve stem seal 100 includes a metal ring 101, a seal lip 102, a back pressure lip 103, and a seal fitting portion 104.

The metal ring 101 is an annular member having a substantially L--shape section. The seal lip 102 and the back pressure lip 103 are seal lips integrally formed with the metal ring 101 and made of a rubber-like elastic material and slidably contact an outer peripheral surface of a valve stem not shown. The seal fitting portion 104 is integrally formed with the metal ring 101 along with the seal lip 102 and the back pressure lip 103 and is fitted to the outer periphery of a valve guide not shown. A spring 105 enhancing an urging force to the valve stem is mounted on the outer periphery of the seal lip 102.

In general, a rubber-like elastic material such as fluorine rubber is used for the lip potion of the valve stem seal 100. However, in view of an improvement in abrasion, resistance, an improvement in heat resistance, and a decrease in friction, a resin material such as PTFE may be used (for example, see JP 3902084).

However, the resin material such as PTFE is more excellent in rigidity but is less excellent in elasticity than the rubber-like elastic material such as fluorine rubber, the ability following the valve stem is worse when the valve stem is decentered from the valve guide.

The valve stem seal serves to seal a gap between the valve stem and the valve guide so as to supply a lubricant agent to the gap by an amount capable of forming an oil film in the gap within a range where the oil is not leaked to a port. Therefore, when the following ability for the decentering is not good, the amount of lubricant agent supplied to the gap between the valve guide and the valve stem is changed, thereby making the thickness of the oil film uneven or causing a leakage of the lubricant agent to the port.

From either prior art citations US 3 829 105A, US 5 110 142 A or US 6 318 328 A there is known a valve stem seal having the features of the preamble of the main claim.

The object of the invention is to provide a valve stem seal capable of improving eccentricity following ability and further improving sealing ability.

According to the present invention, there is provided a valve stem seal as set out in claim 1. Preferred embodiments are subject matter of the subclaims 2 to 4.

According to this configuration, even when the valve stem is decentered from the valve guide, the lip portion moves in a direction perpendicular to the shaft relative to the seal body portion to follow the decentering of the valve stem, thereby maintaining the contact state of the seal lip and the outer surface of the valve stem.

Therefore, even when the resin material such as PTFE worse in elasticity than the rubber-like elastic material is used, the lip portion can follow the decentering of the valve stem. Accordingly, the resin material such as PTFE can be employed without worrying about the poorness in elasticity and it is thus possible to accomplish an improvement in abrasion resistance, an improvement in heat resistance, and a decrease in friction and to further improve the sealing ability.

The lip portion is configured to move relative to the seal body portion in the direction perpendicular to the shaft. The gap between the bottom surface of the annular concave portion and the base portion of the seal lip can be properly set in consideration of the maximum decentered distance between the valve stem and the valve guide.

The lip portion includes an outer peripheral lip contacting the bottom surface of the annular concave portion, whereby the sealing of oil from the outer periphery of the lip portion is prevented.

### BRIEF DESCRIPTION OF THE DRAWINGS

Fig: 1 is a sectional view schematically illustrating a valve stem seal according to an embodiment of the invention.
Fig. 2 is a diagram schematically illustrating a configuration of the valve stem seal according to the embodiment of the invention.
Fig. 3 is a half-sectional view schematically illustrating a valve stem seal according to the related art.

### DESCRIPTION OF THE PREFERRED EMBODIMENTS

Hereinafter, preferred embodiments of the invention will be described in detail with reference to the accompanying drawings. However, sizes, materials, shapes, and relative arrangements of constituent elements described in the embodiments are not intended to restrict the scope of the invention to the description, so long as any particular description is not made.

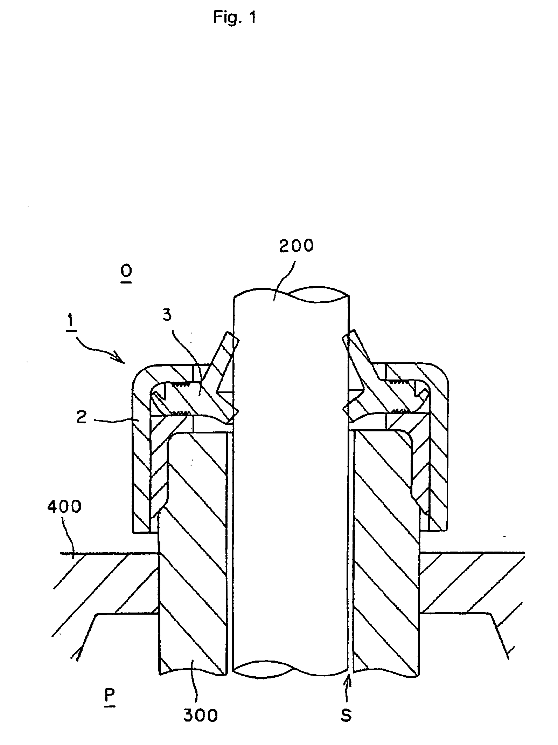

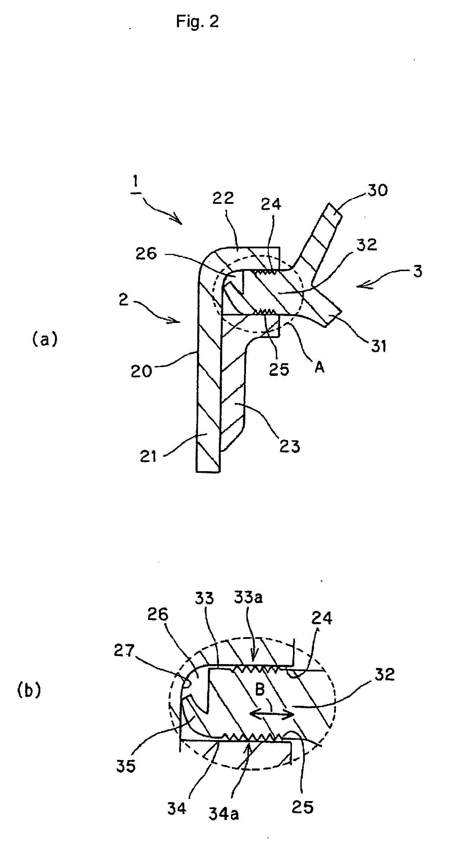

A valve stem seal according to an embodiment of the invention will be described with reference to Figs. 1 and 2. Fig. 1 is a sectional view schematically illustrating a valve stem seal according to an embodiment of the invention, where the valve stem seal is mounted on the valve guide and the valve stem. Fig. 2 is a diagram schematically illustrating a configuration of the valve stem seal according to the embodiment of the invention, where Fig. 2(a) is a half-sectional view of the valve stem seal and Fig. 2(b) is an enlarged view of part A of Fig. 2(a).

As shown in Fig. 1, a cylinder head 400 is provided with a lubricant chamber and a port and a hole passing from the lubricant chamber O to the port P is mounted with a valve guide 300. A valve stem seal 1 is used to seal a lubricant agent in the lubricant chamber while supplying a proper amount of lubricant agent capable of forming an oil film to an annular gap S between a valve stem 200 having an intake or exhaust valve (not shown) of a port (intake or exhaust port) provided to the port P and the valve guide 300 surrounding the valve stem.

More specifically, one end of the valve guide 300 is connected to the lubricant chamber O containing the lubricant agent and the other end is connected to the port P as described above. The valve stem 200 is inserted into the valve guide 300 in a reciprocating manner. By allowing the valve stem 200 to reciprocate, the port not shown is opened and closed by the valve, thereby performing the intake or exhaust.

As the function of the valve stem seal 1, it is important not to leak the lubricant agent in the lubricant chamber for lubricating a cam, a valve train in an engine head to the intake or exhaust port. This is because the leakage of oil causes the leaked oil to be combusted to contaminate the exhaust gas and the exhaust system and causes the oil to further be consumed, thereby badly influencing the engine function. On the hand, when the oil is incompletely sealed, the lubrication between the valve guide and the valve stem disappears to cause a burn or a nibble, thereby causing a problem with damage of the valve train or the like.

The seal lip of the valve stem seal 1 controls the amount of lubricant agent leaked into the annular gap S between the inner peripheral surface of the valve guide 300 and the valve stem 200 from the lubricant chamber with a predetermined fastening margin to the valve stem 200.

In this way, it is necessary to properly maintain the opposite functions of sealing the oil (as small as necessary) and supplying the oil.

As shown in Fig. 1, the valve stem seal 1 includes a seal body portion 2 mounted on the valve guide 300 and a lip portion 3 having a seal lip slidably contacting the outer peripheral surface of the valve stem 200.

As shown in Fig. 2, the seal body portion 2 includes a reinforcing ring 20. The reinforcing ring 20 is a annular metal member having a substantially L-shaped half-section and includes a cylindrical portion 21 as the cylindrical portion and a flange portion 22 extending inward from the end portion of the cylindrical portion close to the lubricant chamber O.

A seal fitting portion 23 formed of a rubber-like elastic material such as fluorine rubber is integrally formed in the inner peripheral surface of the cylindrical portion 21 of the reinforcing ring 20 at a position separated from the flange portion 22. The seal fitting portion 23 is fitted to the outer peripheral surface of the valve guide 300 and the end surface close to the lubricant chamber O, whereby the seal body portion 2 is mounted on the valve guide 300.

The seal fitting portion 23 has an opposing end surface 25 parallel to (perpendicular to the shaft) a side surface 24 of the flange portion 22 of the reinforcing ring 20 close to the port P. An annular concave portion 26 which is concave in the outer diameter direction is formed in the inner surface of the seal body portion 2 opposing the outer peripheral surface of the valve stem 200 by the side surface 24 of the flange portion 22, the opposing end surface 25 of the seal fitting portion 23, and a part (27) of the inner peripheral surface of the cylindrical portion 21 adjacent to the side surface 24 and the opposing end surface 25.

The lip portion 3 is an annular member formed of a resin material such as PTFE and includes a main lip 30, a back pressure lip 31, and a base portion 32 as a base of the seal lips. The lip portion 3 is mounted on the seal body portion 2 by inserting the base portion 32 into the annular concave portion 26.

The main lip 30 extends from the base portion 32 to the lubricant chamber O side and slidable contacts the outer peripheral surface of the valve stem 200. The back pressure lip 31 extends from the base portion 32 to the port P side and slidably contacts the outer peripheral surface of the valve stem 200. The inner diameters of the ends of the main lip 30 and the back pressure lip 31 are set to be smaller than the diameter of the valve stem 200.

In Fig. 1, to easily understand the size relation of the main lip 30, the back pressure lip 31, and the valve stem 200, the lip is not deformed. However, actually, the ends of the lips are deformed to enlarge the diameter along the peripheral surface of the valve stem 200 and closely contact the peripheral surface of the valve stem 200.

The size relation of the main lip 30, the back pressure lip 31, and the valve stem 200 is properly set to supply the lubricant agent from the lubricant chamber by an amount capable of forming an oil film in the annular gap S while suppressing the leakage to the port.

The back pressure lip 31 prevents a high pressure generated in the port P side from being directly applied to the main lip 30, thereby protecting the main lip 30 and securing the stable behavior thereof. The back pressure lip extends to the opposite side (the port P side) of the main lip 30 about the base portion 32 and closely contacts the outer peripheral surface of the valve stem 200. Accordingly, a reactive force applied to the seal lips from the outer peripheral surface of the valve stem 200 can be made to balanceably act on the base portion 32 without leaning on any one side of the lubricant chamber O and the port P.

Both side surfaces 33 and 34 of the base portion 32 in the axial direction are perpendicular to the shaft and contact the side surfaces (the side surface 24 of the flange portion 22 and the opposing surface 25 of the seal fitting portion 23) of the annular concave portion 26 so as to slide in the direction perpendicular to the shaft. The outer diameter of the base portion 32 is set to be smaller than the diameter (the inner diameter of the cylindrical portion 21) of the bottom surface 27. That is, the surfaces of the base portion 32 and the annular concave portion 26 perpendicular to the shaft contact each other and the base portion is fitted with a gap from the bottom surface 27 of the annular concave portion 26. Therefore, the lip portion 3 (base portion 32) is configured to be movable in the direction perpendicular to the shaft relative to the seal body portion 2 (annular concave portion 26) (indicated by arrow B in Fig. 2(b)).

The size relation of the outer diameter of the base portion 32 and the diameter of the bottom surface 27 is properly set in consideration of the maximum decentered distance between the valve stem 200 and the valve guide 300. For example, the size difference between the outer diameter of the base portion 32 and the diameter of the bottom surface 27 can be set to be greater than the size difference (double the width in the diameter direction of the annular gap S) between the diameter of the valve stem 200 and the hole diameter of the valve guide 300, thereby setting the size of the gap between the base portion 32 and the bottom surface 27 to be greater than the maximum decentered distance of the valve stem 200.

The lubricant agent for enhancing the lubrication between the base portion 32 and the annular concave portion 26 is applied between the side surfaces 33 and 34 of the base portion 32 and the side surfaces (the side surface 24 and the opposing surface 25) of the annular concave portion 26. Accordingly, it is possible to smooth the movement of the lip portion 3 relative to the seal body portion 2 in the direction perpendicular to the shaft. Therefore, it is possible to further improve the eccentricity following ability.

Fine recesses (concave portions) 33a and 34a having an annular shape concentric about the shaft center are formed in parallel to each other on the side surfaces 33 and 34 of the base portion 32. The fine recesses 33a and 34a serve to retain the lubricant agent applied to the sliding surface between the base portion 32 and the annular concave portion 26 to maintain the lubrication, thereby keeping the smooth movement of the lip portion 3 for a long time. In this embodiment, the fine recesses are formed as V-shape grooves shown in the drawing. However, the invention is not limited to the configuration, as long as it can suitably retain the lubricant agent without hindering the smooth movement of the lip portion 3.

The outer peripheral surface of the base portion 32 is provided with an outer peripheral lip 35 contacting the bottom surface 27 of the annular concave portion 26. The outer diameter of the lip end of the outer peripheral lip 35 is set to be greater than the diameter (the inner diameter of the cylindrical portion 21) of the bottom surface 27 and the lip end thereof is deformed to reduce the diameter along the bottom surface 27 (the inner peripheral surface of the cylindrical portion 22) and closely contacts the bottom surface 27. Accordingly, it is possible to prevent the leakage of hot oil from the outer periphery of the lip portion 3.

Since the outer peripheral lip 35 is deformed to reduce the diameter and closely contacts the bottom surface 27, the outer periphery of the base portion 32 (the lip portion 3) is supported elastically with respect to the bottom surface 27. That is, the outer peripheral lip 35 is mounted with an elastic force acting in the diameter direction. Similarly, since the main lip 30 and the back pressure lip 31 are deformed to enlarge the diameter and thus the inner periphery of the base portion 32 closely contacts the outer peripheral surface of the valve stem 200, the inner periphery of the base portion is supported elastically with respect to the outer peripheral surface of the valve stem 200. Therefore, the lip portion 3 is supported elastically in the diameter direction by the lips, thereby smoothly following the decentering of the valve stem 200.

According to this embodiment, the lip portion is provided to be movable relative to the seal body portion in the direction perpendicular to the shaft. Accordingly, even when the valve stem is decentered relative to the valve guide, the lip portion can move relative to the seal body portion in the direction perpendicular to the shaft to follow the decentering of the valve stem, thereby maintaining the contact state of the seal lip and the outer peripheral surface of the valve stem.

Therefore, even when the resin material such as PTFE worse in elasticit than the rubber-like elastic material is used, the lip portion can follow the decentering of the valve stem. Accordingly, the resin material such as PTFE can be employed without worrying about the poorness in elasticity and it is thus possible to accomplish an improvement in abrasion resistance, an improvement in heat resistance, and a decrease in friction and to further improve the sealing ability.

Since the annular concave portion mounted with the lip portion is formed so separate the seal fitting portion integrally formed with the reinforcing ring from the flange portion and the opposing surface parallel to the side surface of the flange portion is formed in the seal fitting portion, it is possible to easily form the annular concave portion.

The main lip contacts the outer peripheral surface of the valve stem on the side closer to the lubricant chamber than the base portion and the back pressure lip contacts the outer peripheral surface of the valve stem on the side closer to the port than the base portion. In this way, since the main lip and the back pressure lip can contact the outer peripheral surface of the valve stem on the lubricant chamber side and the port side, respectively, with the base portion of the seal lip interposed therebetween, a reactive force from the outer peripheral surface of the valve stem can be balanceably applied to the base portion of the seal lip without leaning on any one side of the lubricant chamber and the port. Therefore, it is possible to further smooth the movement of the lip portion relative to the seal body portion in the direction perpendicular to the shaft, thereby further improving the eccentricity following ability.

The base portion (lip portion) is supported at three points by the lips 30, 31, 35. That is, the outer periphery thereof is supported elastically with respect to the bottom surface of the annular concave portion by the outer peripheral lip 35 and the inner periphery thereof is supported elastically with respect to the outer peripheral surface of the valve stem by the main lip 30 and the back pressure lip 31. Accordingly, the lip portion 3 can smoothly follow the decentering of the valve stem 200, thereby effectively suppressing the change in contact states of the main lip 30 and the back pressure lip 31 due to the decentering.

## Claims

1. A valve stem seal (1) which seals an annular gap (S) between a valve guide (300) and a valve stem (200) provided in the valve guide (300) in a reciprocating manner so as to feed a lubricant agent from a lubricant chamber (0) to the annular gap (S) by an amount capable of forming an oil film in the annular gap (S) while suppressing leakage to a port (P), the valve stem seal (1) comprising a seal body portion (2) having a reinforcing ring (20) and fitted to the valve guide (300); and a lip portion (3) which has a seal lip (30, 31) slidably contacting an outer peripheral surface of the valve stem (200) and is provided so as to move in a direction perpendicular to a shaft with respect to the seal body portions (2), the seal body portion (2) has an annular concave portion (26) which is concave in an outer diameter direction in a surface opposing the outer peripheral surface of the valve stem (200), the lip portion (3) is configured such that a base portion (32) of the seal lip contacts a side surface (24) of the annular concave portion (26) so as to slide in a direction perpendicular to the shaft and is mounted in the annular concave portion (26) with a gap between the base portion (32) and a bottom surface (27) of the annular concave portion (26), **characterized in that** the lip portion (3) has an outer peripheral lip (35) contacting the bottom surface (27) of the annular concave portion (26).

2. The valve stem seal (1) according to claim 1, wherein the reinforcing ring (20) has a cylindrical portion (21) and a flange portion (22) extending inwardly from an end portion of the cylindrical portion (21) close to the lubricant chamber (0), wherein the seal fitting portion (23) is integrally formed with an inner peripheral surface of the cylindrical portion (21) away from the flange portion (22) and has an opposing end surface (25) parallel to a side surface (24) of the flange portion close (22) to the port (P), and wherein the side surface (24) of the flange portion (22) close to the port (P) and the opposing end surface (25) of the seal fitting portion (23) respectively form the side surfaces (24) of the annular concave portion (26), and a part of the inner peripheral surface of the cylindrical portion (21) adjacent to the side surface (24) forms the bottom surface (27) of the annular concave portion (26).

3. The valve stem seal (1) according to claim 1 or 2, wherein the lubricant agent is applied between the side surfaces (24, 25) of the annular concave portion (26) and a sliding surface with the side surfaces (33, 34) of the annular concave portion (26) in the base portion (32) of the seal lip (30, 31), and wherein the sliding surface has fine recesses (33a, 34a) for retaining the lubricant agent.

4. The valve stem seal (1) according to any one of claims 1 to 3, wherein the seal lip (30, 31) includes a main lip (30) which contacts the outer peripheral surface of the valve stem (200) closer to the lubricant chamber (0) than the base portion (32) of the seal lip, and a back pressure lip (31) which contacts the outer peripheral surface of the valve stem (200) closer to the port (P) than the base portion (32) of the seal lip.

## Patentansprüche

1. Ventilschaftdichtung (1), die einen ringförmigen Spalt (S) zwischen einer Ventilführung (300) und einem Ventilschaft (200) abdichtet, der in der Ventilführung (300) hin- und hergehend vorgesehen ist, um dem ringförmigen Spalt (S) ein Schmiermittel von einer Schmiermittelkammer (0) in einer solchen Menge zuzuführen, dass sich ein Ölfilm im ringförmigen Spalt (S) bilden kann, während ein Lecken zu einem Ausgang (P) unterbunden ist, wobei die Ventilschaftd-chtung (1) einen Dichtungskörperabschnitt (2), der einen Verstärkungsring (20) hat und an der Ventilführung (300) angebracht ist, und einen Lippenabschnitt (3) umfasst, der eine Dichtungslippe (30, 31) hat, die eine äußere Umfangsfläche des Ventilschafts (200) gleitend kontaktiert, und so vorgesehen ist, dass er sich bezüglich der Dichtungskörperabschnitte (2) in einer senkrecht zu einem Schaft verlaufenden Richtung bewegt, wobei der Dichtungskörperabschnitt (2) einen ringförmigen konkaven Abschnitt (26) hat, der in einer Außendurchmesserrichtung in einer der äußeren Umfangsfläche des Ventilschafts (200) gegenüberliegenden Fläche konkav ist, wobei der Lippenabschnitt (3) so konfiguriert ist, dass ein Basisabschnitt (32) der Dichtungslippe eine Seitenfläche (24) des ringförmigen konkaven Abschnitts (26) kontaktiert, um in einer senkrecht zum Schaft verlaufenden Richtung zu gleiten, und im ringförmigen konkaven Abschnitt (26) mit einem Spalt zwischen dem Basisabschnitt (32) und einer Bodenfläche (27) des ringförmigen konkaven Abschnitts (26) montiert ist, **dadurch gekennzeichnet, dass** der Lippenabschnitt (3) eine äußere Umfangslippe (35) hat, die die Bodenfläche (27) des ringförmigen konkaven Abschnitts (26) kontaktiert.

2. Ventilschaftdichtung (1) nach Anspruch 1, wobei der Verstärkungsring (20) einen zylindrischen Abschnitt (21) und einen Flanschabschnitt (22) hat, der sich von einem Endabschnitt des zylindrischen Abschnitts (21) in der Nähe der Schmiermittelkammer (O) nach innen erstreckt, wobei der Dichtungsanbringabschnitt (23) integral mit einer inneren Umfangsfläche des zylindrischen Abschnitts (21) weg vom Flanschabschnitt (22) ausgebildet ist und eine gegenüberliegende Endfläche (25) hat, die parallel zu einer Seitenfläche (24) des Flanschabschnitts (22) in der Nähe des Ausgangs (P) verläuft, und wobei die Seitenfläche (24) des Flanschabschnitts (22) in der Nähe des Ausgangs (P) und die gegenüberliegende Endfläche (25) des Dichtungsanbringabschnitts (23) jeweils die Seitenflächen (24) des ringförmigen konkaven Abschnitts (26) bilden und ein Teil der inneren Umfangsfläche des zylindrischen Abschnitts (21) neben der Seitenfläche (24) die Bodenfläche (27) des ringförmigen konkaven Abschnitts (26) bildet.

3. Ventilschaftdichtung (1) nach Anspruch 1 oder 2, wobei das Schmiermittel zwischen den Seitenflächen (24, 25) des ringförmigen konkaven Abschnitts (26) und einer Gleitfläche mit den Seitenflächen (33, 34) des ringförmigen konkaven Abschnitts (26) im Basisabschnitt (32) der Dichtungslippe (30, 31) aufgebracht ist und wobei die Gleitfläche feine Aussparungen (33a, 34a) zum Halten des Schmiermittels hat.

4. Ventilschaftdichtung (1) nach einem der Ansprüche 1 bis 3, wobei die Dichtungslippe (30, 31) eine Hauptlippe (30), die die äußere Umfangsfläche des Ventilschafts (200) näher der Schmiermittelkammer (O) als der Basisabschnitt (32) der Dichtungslippe kontaktiert, und eine Gegendrucklippe (31) aufweist, die die äußere Umfangsfläche des Ventilschafts (200) näher dem Ausgang (P) als der Basisabschnitt (32) der Dichtungslippe kontaktiert.

## Revendications

1. Joint de tige de soupape (1) qui scelle un espace annulaire (S) entre un guide de soupape (300) et une tige de soupape (200) prévue dans le guide de soupape (300) de manière alternative afin d'acheminer un lubrifiant depuis une chambre de lubrifiant (0) jusqu'à l'espace annulaire (S) dans une quantité capable de former un film d'huile dans l'espace annulaire (S) tout en empêchant les fuites vers un orifice (P), le joint de tige de soupape (1) comprenant une portion de corps de joint (2) ayant une bague de renforcement (20) et étant ajustée sur le guide de soupape (300) ; et une portion de lèvre (3) présentant une lèvre d'étanchéité (30, 31) venant en contact par coulissement avec une surface périphérique extérieure de la tige de soupape (200) et étant prévue de manière à se déplacer dans une direction perpendiculaire à un axe par rapport aux portions de corps de joint (2), la portion de corps de joint (2) ayant une portion concave annulaire (26) qui est concave dans une direction de diamètre extérieur dans une surface opposée à la surface périphérique externe de la tige de soupape (200), la portion de lèvre (3) étant configurée de telle sorte qu'une portion de base (32) de la lèvre d'étanchéité vienne en contact avec une surface latérale (24) de la portion concave annulaire (26) de manière à coulisser dans une direction perpendiculaire à l'axe et étant montée dans la portion concave annulaire (26) avec un espace entre la portion de base (32) et une surface inférieure (27) de la portion concave annulaire (26), **caractérisé en ce que** la portion de lèvre (3) a une lèvre périphérique inférieure (35) qui vient en contact avec la surface inférieure (27) de la portion concave annulaire (26).

2. Joint de tige de soupape (1) selon la revendication 1, dans lequel la bague de renforcement (20) a une portion cylindrique (21) et une portion de bride (22) s'étendant vers l'intérieur depuis une portion d'extrémité de la portion cylindrique (21) à proximité de la chambre de lubrifiant (0), la portion d'ajustement de joint (23) étant formée intégralement avec une surface périphérique interne de la portion cylindrique (21) à l'écart de la portion de bride (22) et ayant une surface d'extrémité opposée (25) parallèle à une surface latérale (24) de la portion de bride (22) à proximité de l'orifice (P), et la surface latérale (24) de la portion de bride (22) à proximité de l'orifice (P) et la surface d'extrémité opposée (25) de la portion d'ajustement de joint (23) formant respectivement les surfaces latérales (24) de la portion concave annulaire (26), et une partie de la surface périphérique interne de la portion cylindrique (21) adjacente à la surface latérale (24) formant la surface de fond (27) de la portion concave annulaire (26).

3. Joint de tige de soupape (1) selon la revendication 1 ou 2, dans lequel le lubrifiant est appliqué entre les surfaces latérales (24, 25) de la portion concave annulaire (26) et une surface de glissement avec les surfaces latérales (33, 34) de la portion concave annulaire (26) dans la portion de base (32) de la lèvre d'étanchéité (30, 31), et la surface de glissement ayant de fins retraits (33a, 34a) pour retenir le lubrifiant.

4. Joint de tige de soupape (1) selon l'une quelconque des revendications 1 à 3, dans lequel la lèvre d'étanchéité (30, 31) comporte une lèvre principale (30) qui vient en contact avec la surface périphérique externe de la tige de soupape (200) plus près de la chambre de lubrifiant (0) que la portion de base (32) de la lèvre d'étanchéité, et une lèvre de contre-pression (31) qui vient en contact avec la surface périphérique externe de la tige de soupape (200) plus près de l'orifice (P) que la portion de base (32) de la lèvre d'étanchéité.
